# EUROPÄISCHE PATENTSCHRIFT

(11) **EP 1 913 267 B1**
(45) Veröffentlichungstag und Bekanntmachung des Hinweises auf die Patenterteilung: **14.10.2009**
(21) Anmeldenummer: 06775782.3
(22) Anmeldetag: 02.08.2006
(51) Int. Cl.: F16B 19/08, B21J 15/02

(54) **SELBSTSTANZENDES ROTATIONSSYMMETRISCHES NIET**
SELF-PIERCING ROTATIONALLY SYMMETRICAL RIVET
RIVET A SYMETRIE DE ROTATION AUTOPERFORANT

(30) Priorität: 09.08.2005 DE 202005012677 U
(43) Veröffentlichungstag der Anmeldung: 23.04.2008
(73) Patentinhaber: Acument GmbH & Co. OHG, 56567 Neuwied (DE)
(72) Erfinder: JOKISCH, Matthias, 30853 Langenhagen (DE)
(74) Vertreter: Beck, Alexander
(86) Internationale Anmeldenummer: PCT/DE2006/001341
(87) Internationale Veröffentlichungsnummer: WO 2007/016901

(56) Entgegenhaltungen:
- EP-A- 1 387 093
- DE-U1- 20 001 103
- US-A1- 2002 006 321
- US-B1- 6 662 911

## Beschreibung

Die vorliegende Erfindung betrifft ein selbststanzendes, rotationssymmetrisches Niet mit einem Nietkopf und einem Nietschaft mit einer zentrischen Ausnehmung, die durch den Nietkopf geschlossen ist.

Solche, auch als "Stanzniete" bezeichnete Befestigungsvorrichtungen sind beispielsweise aus der EP 720 695, der EP 833 063, der EP 1 229 254 und der DE 44 31 769 bekannt. Sie bestehen üblicherweise aus einem im Wesentlichen als werkstückseitig offenem Hohlzylinder ausgebildeten Schaft, der über Radien in einen scheibenförmigen Kopf übergeht.

Die Stanzniete gemäß dem Stand der Technik weisen jedenfalls im Schaftbereich stets eine zylindrische Kontur auf.

Inzwischen sind diese Stanzniete üblicher Stand der Technik. In der blechverarbeitenden Industrie, insbesondere in der Autoindustrie, geht man aber mehr und mehr dazu über, hochfeste Stähle zu verarbeiten. Stanzniete gemäß dem Stand der Technik können dann nicht mehr verwendet werden, da sie sich verformen oder aufstauchen, bevor die Stanzung bewirkt ist.

Zur Lösung dieses Problems wurde schon vorgeschlagen, die Stanzniete gemäß dem Stand der Technik ebenfalls aus einem Metall mit höherer Festigkeit herzustellen. Dies führte jedoch nicht zu dem gewünschten Erfolg, da dann beim Setzen zunehmend die Gefahr der Rissbildung entsteht.

Weiterhin wünschte die Automobilindustrie einen Stanzniet, der so gesetzt werden kann, dass nach dem Setzen kein Spalt zwischen dem Niet und dem Werkstück, in welches der Niet gesetzt worden ist, besteht, da nur so eine hohe Korrosionsbeständigkeit der Stanznietverbindung erzielt werden kann.

Ausgehend von dieser Situation ist es daher Aufgabe der vorliegenden Erfindung, einen solchen Stanzniet dergestalt weiterzubilden, dass er auch in Bleche aus hochfestem Stahl gesetzt werden kann, ohne dass man für den Stanzniet besonders harte Materialien wählen muss, wobei gleichzeitig eine Spaltbildung zwischen Niet und Werkstück nach dem Setzen ausgeschlossen werden soll.

Erfindungsgemäß wird diese Aufgabe dadurch gelöst, dass der Nietschaft des Stanzniets eine Außenkontur aufweist, die im Wesentlichen dem Verlauf einer an dem Nietschaft von außen angelegten Ellipse folgt, deren große Achse im Wesentlichen parallel zu der Achse des Niets verläuft.

Gemäß der vorliegenden Erfindung wird also erstmals von der zylindrischen Außenkontur des Schaftes des Stanzniets abgewichen, die man bisher wegen der erforderlichen Stanzeigenschaften für unabdingbar hielt. Durch die erfindungsgemäß größere Dicke der Wand des Schaftes im oberen Bereich des Schaftes kann dieser höhere Kräfte während des Stanzvorganges übertragen und somit kann der erfindungsgemäße Stanzniet auch in Bleche aus hochfestem Stahl und Edelstahl gesetzt werden, ohne dass der Nietschaft beim Nietvorgang zusammenbricht oder staucht. Die erfindungsgemäße Ausgestaltung des Nietschaftes verhindert vorteilhafterweise außerdem die Bildung von Spalten zwischen dem Stanzniet und dem Material des Werkstückes.

Um die Fertigung der Außenkontur des Nietschaftes zu erleichtern, kann deren Verlauf durch Sehnenabschnitte der von außen angelegten Ellipse angenähert sein.

Vorzugsweise ist der Nietkopf dabei als sehr flacher Zylinder ausgebildet.

Eine besonders vorteilhafte Form ergibt sich, wenn die Höhe des Nietschaftes der halben Länge der großen Achse der Ellipse entspricht.

Ebenso ist es bevorzugt, wenn der Unterschied der Außenradien des Nietschaftes am schaftseitigen und am kopfseitigen Ende der halben Länge der kleinen Achse der Ellipse entspricht.

Besonders bevorzugt ist es, wenn die Ausnehmung in dem Schaft kopfseitig kegelförmig zuläuft.

Die Ausnehmung kann aber kopfseitig auch dem Verlauf einer weiteren Ellipse mit waagerecht liegender großer Achse folgen.

Gemäß einer weiteren bevorzugten Ausführungsform der Erfindung ist der Übergang von der Außenkontur des Schaftes des Niets am schaftseitigen Ende des Niets zur Innenkontur, die die Ausnehmung begrenzt, durch einen sehr kleinen Radius außen und einen sehr großen Radius innen gebildet.

Ebenso ist es bevorzugt, wenn die Außenkontur des Schaftes des Niets am schaftseitigen Ende des Niets etwa rechtwinklig in eine kreisringförmige Fläche übergeht, und diese in einem großen Radius in die Innenkontur, die die Ausnehmung begrenzt, übergeht.

Weiter ist es ebenfalls bevorzugt, dass die Außenkontur des Schaftes des Niets am schaftseitigen Ende des Niets etwa rechtwinklig in eine kreisringförmige Fläche übergeht, und der schaftseitige Teil der Innenkontur, die die Ausnehmung begrenzt, im wesentlichen dem Verlauf einer kleineren Ellipse folgt, die dem Schaft zumindest teilweise einbeschriebenist, und deren große Achse im wesentlichen parallel zu der Achse des Niets verläuft.

Eine weitere bevorzugte Ausführungsform der Erfindung besteht darin, dass die Außenkontur des Schaftes des Niets am schaftseitigen Ende des Niets spitzwinklig in eine Schräge übergeht, die bereits die Innenkontur der Ausnehmung bildet, so dass die Ausnehmung aus einem in Richtung des Nietkopfes zulaufenden Kegelstumpf besteht, der kopfseitig in einen zylindrischen Bereich übergeht.

Weiter ist es bevorzugt, dass die Außenkontur des Schaftes des Niets am schaftseitigen Ende des Niets mit einem kleinen Radius in die Innenkontur übergeht, die die Ausnehmung begrenzt, und die in ihrem schaftseitigen Teil im wesentlichen dem Verlauf einer kleineren Ellipse folgt, die dem Schaft zumindest teilweise einbeschrieben ist, und deren große Achse im wesentlichen parallel zu der Achse des Niets verläuft.

Ausführungsbeispiele der vorliegenden Erfindung werden im folgenden an Hand der beiliegenden Zeichnungen näher beschrieben. Es zeigt:
**Figur 1** ein erfindungsgemäßes Stanzniet in Schnittdarstellung parallel zur Rotationsachse; und
die Figuren 2 bis 13 ebensolche Schnittdarstellungen abgewandelter erfindungsgemäßer Stanzniete.

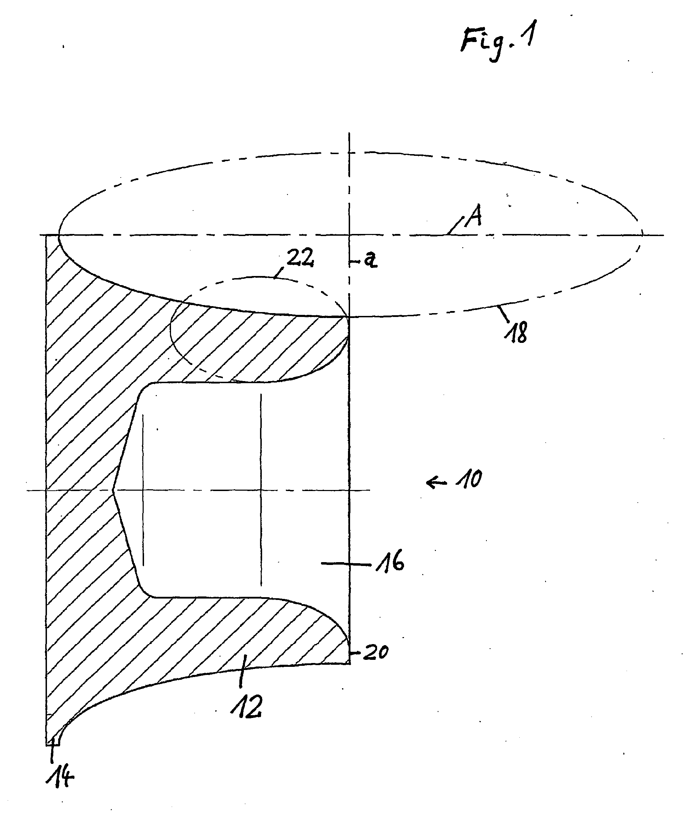

Figur 1 zeigt eine erste Ausführungsform eines erfindungsgemäßen Stanzniets 10 mit einem Schaft 12 und einem Kopf 14, wobei der Schaft 12 eine Ausnehmung 16 umschließt, die zum Kopf 14 hin geschlossen ist, und dort flach-kegelförmig ausläuft.

Die Außenkontur des Schaftes 12 wird dabei durch eine Ellipse 18 gebildet, deren große Achse A parallel zu der Rotationsachse des Niets 10 angeordnet ist, und deren Länge das Doppelte der Länge des Schaftes 12 beträgt, so dass die Außenkontur von einem Viertel, also einem Quadranten der Ellipse 18 gebildet wird. Die Länge der kleinen Achse a der Ellipse entspricht dabei dem Doppelten des Unterschiedes der Außenradien des Nietschaftes 12 am schaftseitigen und am kopfseitigen Ende.

Die Außenkontur des Nietschaftes 12 geht am schaftseitigen Ende nahezu rechtwinklig in eine schmale kreisringförmige Fläche 20 über. Die schmale kreisringförmige Fläche 20 geht dann tangential in die Innenkontur des Schaftes 12 über, die gleichzeitig die Begrenzung der Ausnehmung 16 bildet. Der Verlauf dieser Innenkontur folgt dabei dem Verlauf einer weiteren Ellipse 22, die teilweise dem Querschnitt des Schaftes 12 einbeschrieben ist, und deren große Achse parallel zu der Rotationsachse des Niets 10 angeordnet ist. Sobald der Verlauf der Ellipse 22 parallel zur der Rotationsachse des Niets 10 ist, geht dieser Verlauf tangential in einen zylinderförmigen Abschnitt der Ausnehmung 16 über, der kopfseitig über einen Radius in den flach-kegelförmigen Abschluss der Ausnehmung 16 mündet.

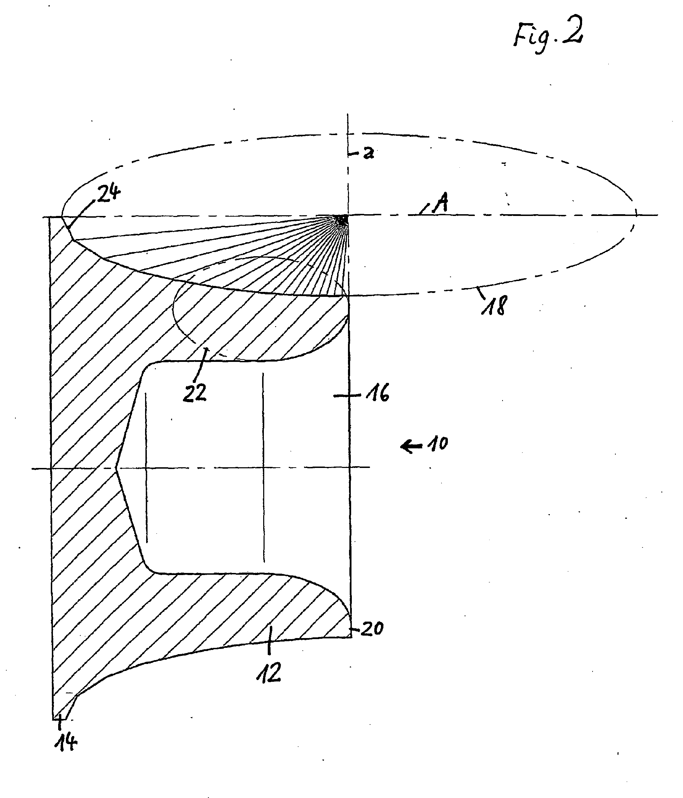

Figur 2 zeigt eine ähnliche Ausführungsform des erfindungsgemäßen Stanzniets 10. Bei dieser ist jedoch der Verlauf der Ellipse 18 durch einzelne Sehnenabschnitte 24 angenähert, wodurch die Fertigung des erfindungsgemäßen Stanzniets erleichtert werden kann. Die geometrische Entwicklung der Sehnen oder Sekantenstücke 24 ist durch Darstellung der jeweiligen Radien der Ellipse verdeutlicht.

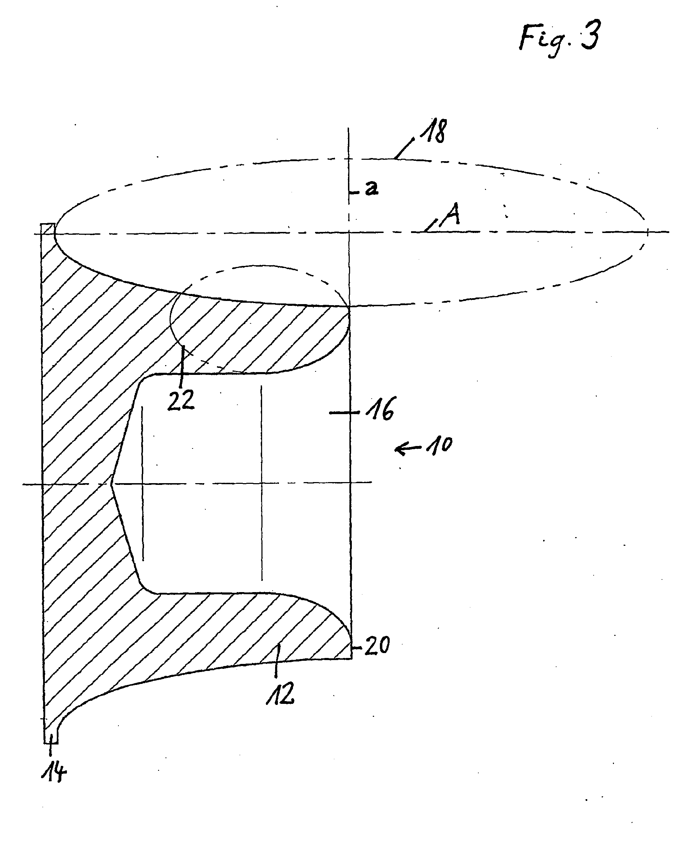

Figur 3 zeigt eine weitere Abwandlung des Stanzniets der Figur 1, wobei der Nietkopf 14 verbreitert ist, so dass er über die große Achse A der Ellipse 18 nach außen übersteht.

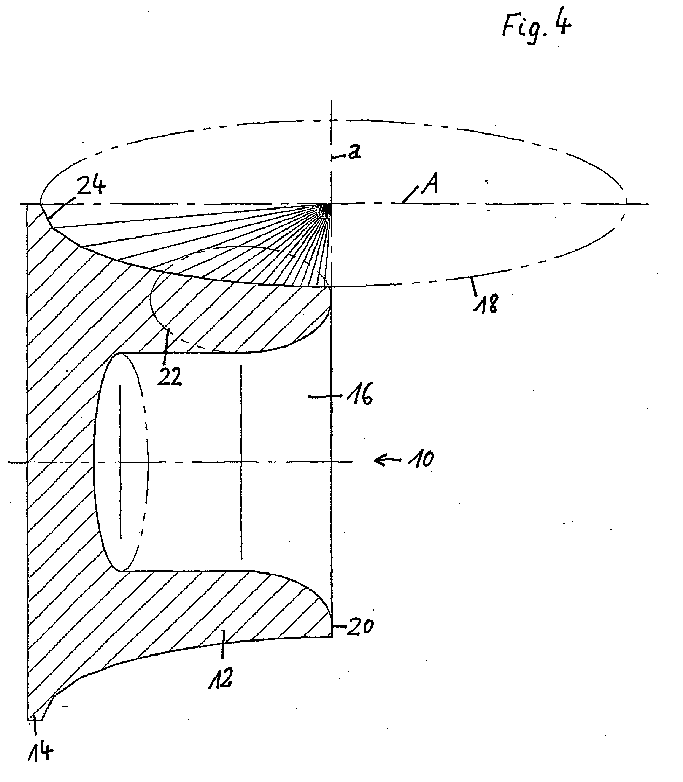

Figur 4 wiederum zeigt eine Abwandlung des Stanzniets gemäß Figur 2, bei dem die Ausnehmung 16 kopfseitig mit einer Kuppel anstelle des kegelförmigen Auslaufs abgeschlossen ist, deren Schnittdarstellung dem Verlauf einer dritten Ellipse folgt, deren große Achse waagerecht liegt und in der Länge dem Durchmesser der Ausnehmung 16 entspricht.

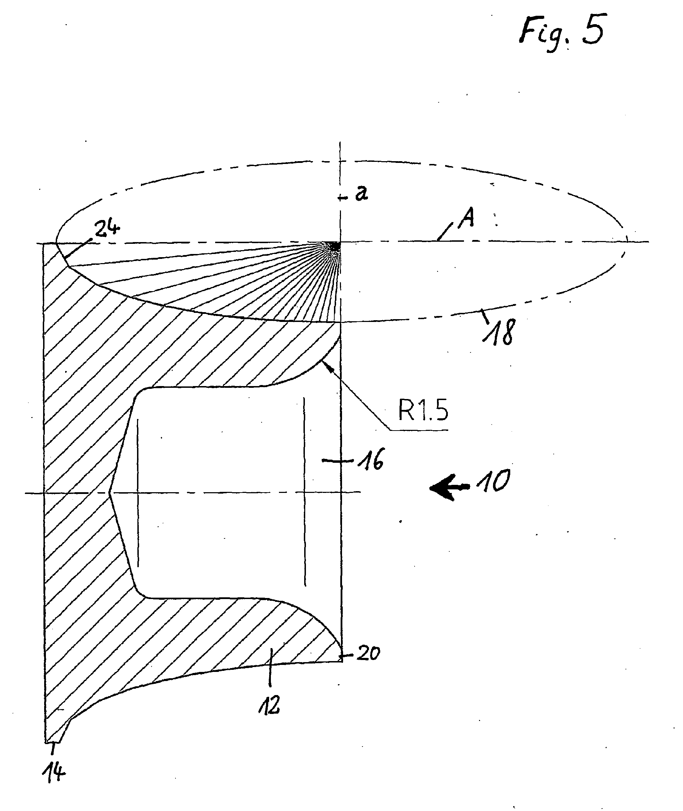

Figur 5 zeigt eine weitere Abwandlung der Ausführungsform gemäß Figur 2, bei der die Innenkontur der Ausnehmung 16 im Anschluss an die kreisringförmige Fläche 20 nicht dem Verlauf einer weiteren Ellipse, sondern einem Radius R 1,5 folgt.

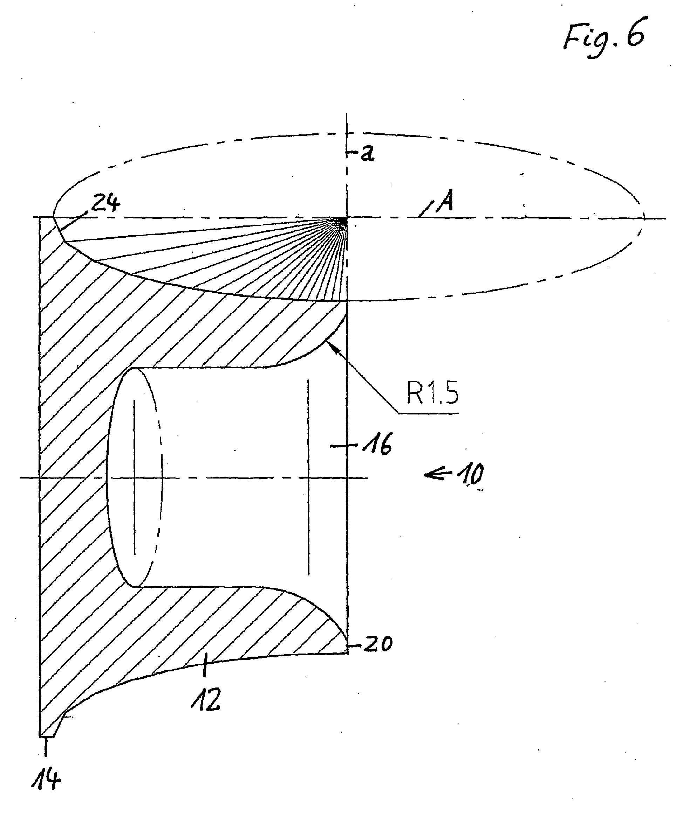

Figur 6 zeigt wiederum eine weitere Abwandlung der Ausführungsform des Stanzniets gemäß Figur 5, bei dem der flachkegelförmige kopfseitige Auslauf der Ausnehmung 16 durch eine Kuppel ersetzt ist, deren Querschnitt im wesentlichen dem Verlauf einer weiteren Ellipse mit waagerecht liegender großer Achse folgt.

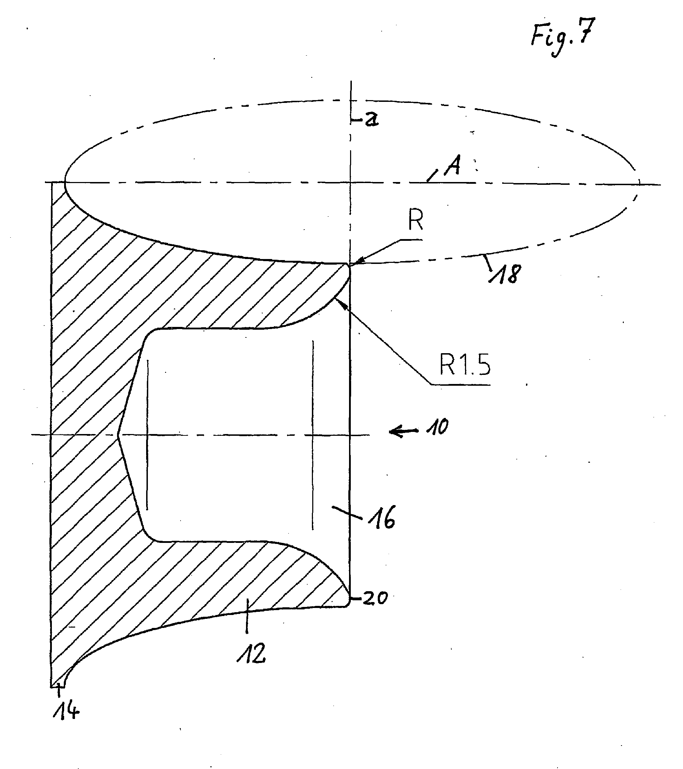

Figur 7 stellt wiederum eine Abwandlung der Figur 1 dar, bei der die Außenkontur über einen sehr kleinen Radius R, und nicht mit einem nahezu rechten Winkel in die schmale kreisringförmige Fläche 20 übergeht. Im weiteren Verlauf folgt die Innenkontur 16 dieses Mal nicht einer Ellipse, sondern einem großen Radius R 1.5.

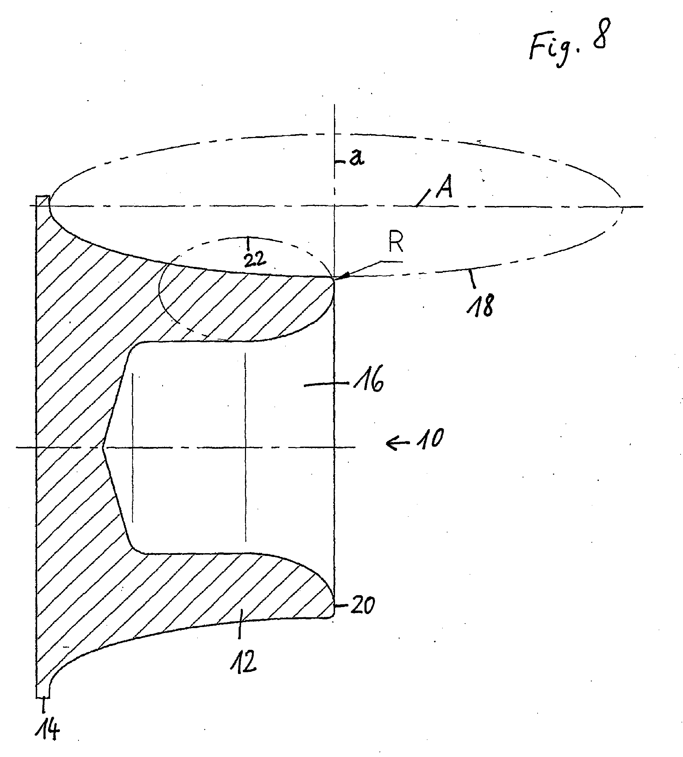

Figur 8 zeigt eine Abwandlung der Ausführungsform gemäß Figur 3, bei der der Übergang zwischen der Außenkontur und der schaftseitigen kreisringförmigen Fläche 20 nicht nahezu rechtwinklig, sondern über einen sehr kleinen Radius R erfolgt.

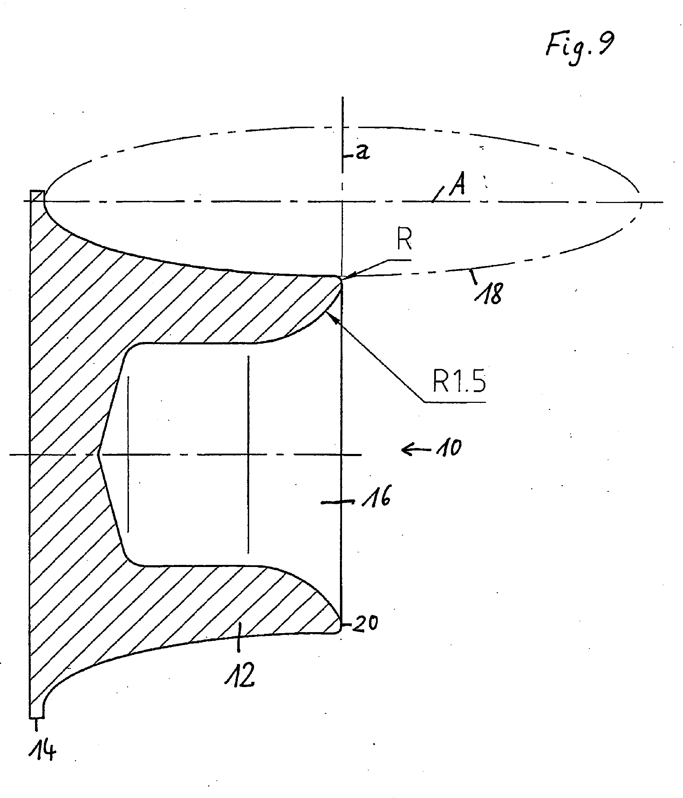

Figur 9 zeigt wiederum eine Abwandlung der Figur 8, bei der der schaftseitige Verlauf der Innenkontur nicht einer Ellipse folgt, sondern einem großen Radius R 1.5.

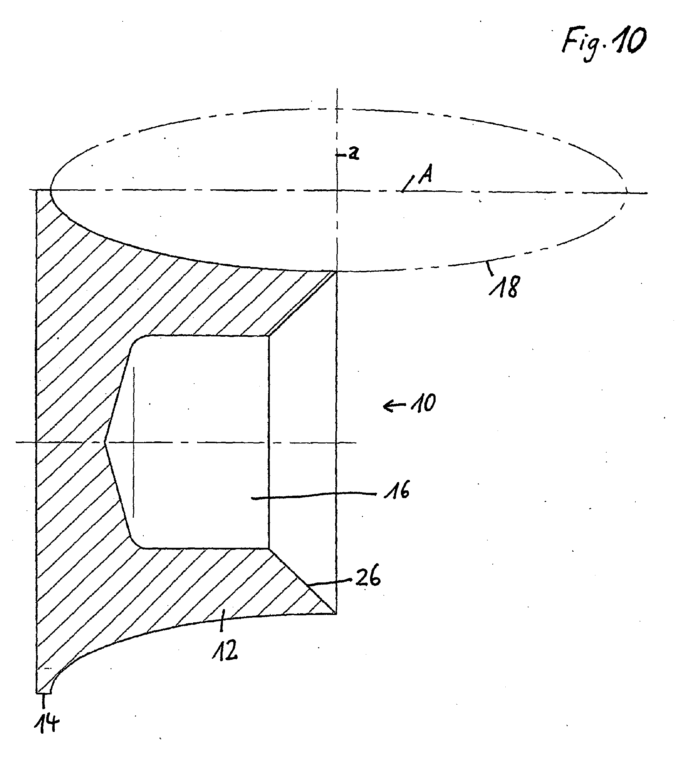

Figur 10 zeigt eine weitere erfindungsgemäße Ausführungsform eines Stanzniets, bei dem der Übergang von der Außenkontur des Schaftes 12 zur Innenkontur spitzwinklig erfolgt, so dass Außen- und Innenkontur direkt aufeinander treffen, und zwar mit einem Winkel deutlich kleiner als 90°. Die Ausnehmung 16 wird dann von einer Schräge 26 begrenzt, die dann in die übliche Zylinderform der Ausnehmung 16 übergeht, so dass die Ausnehmung 16 von der Schaftseite her gesehen erst kegelstumpfförmig und dann zylindrisch gestaltet ist und schließlich über einen kleinen Radius in eine flachkegelförmige Struktur ausläuft.

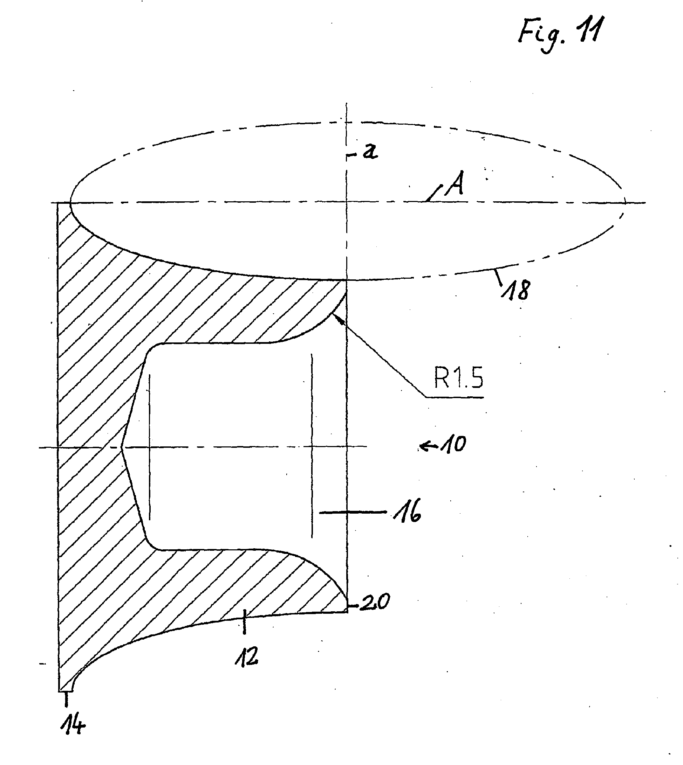

Figur 11 zeigt eine weitere Abwandlung der Figur 1, bei der der schaftseitige Verlauf der Innenkontur nicht einer Ellipse, sondern einem großen Radius R 1.5 folgt.

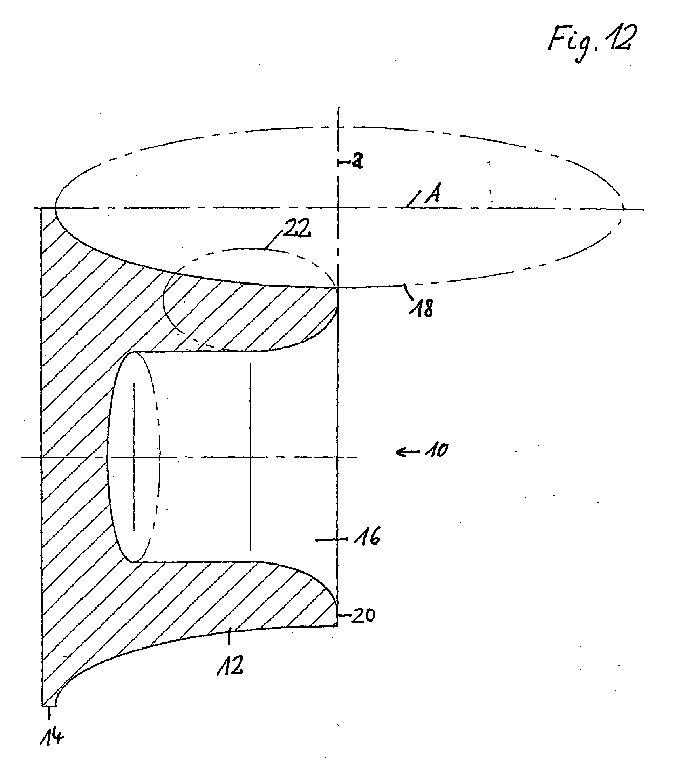

Figur 12 schließlich zeigt noch eine weitere Abwandlung der Figur 1, bei der die Ausnehmung 16 nicht in einem flachen Kegel, sondern in einer weiten Kuppel ausläuft, deren Querschnitt im wesentlichen dem Verlauf einer liegenden Ellipse folgt.

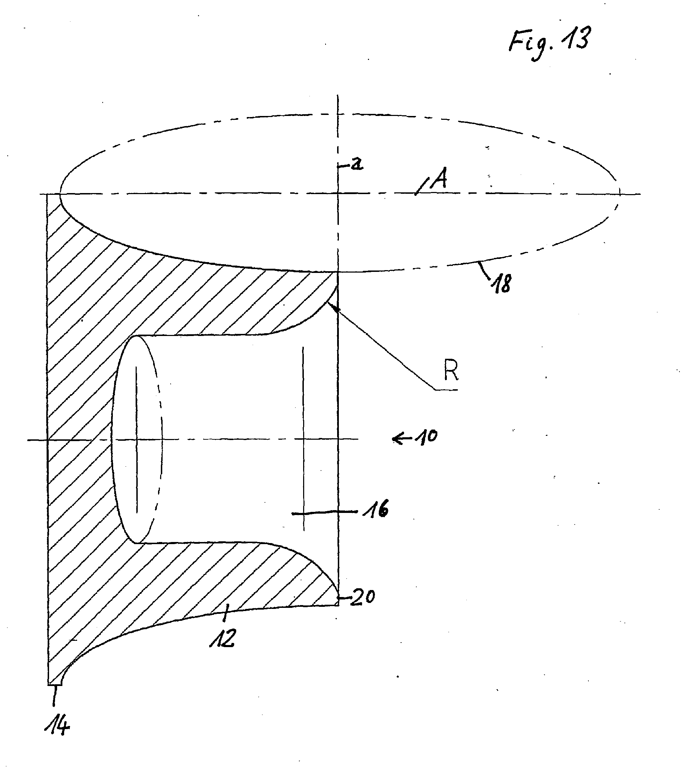

Figur 13 zeigt wiederum eine Abwandlung der Figur 12, bei der der schaftseitige Teil der Innenkontur der Ausnehmung 16 nicht einer Ellipse folgt, sondern einem weiten Radius R.

Alle vorgenannten Ausführungsformen des erfindungsgemäßen Stanzniets können vorzugsweise aus Stahl, Edelstahl, Aluminium oder Titan hergestellt sein.

## Patentansprüche

1. Selbststanzendes rotationssymmetrisches Niet (10) mit einem Nietkopf (14) und einem Nietschaft (12) mit einer zentrischen Ausnehmung (16) die durch den Nietkopf (14) geschlossen ist, **dadurch gekennzeichnet, dass** der Nietschaft (12) eine Außenkontur aufweist, die im wesentlichen dem Verlauf einer an den Nietschaft von außen angelegten Ellipse (18) folgt, deren große Achse (A) im wesentlichen parallel zu der Achse des Nietes (10) verläuft.

2. Niet nach Anspruch 1, **dadurch gekennzeichnet, dass** die Außenkontur des Nietschaftes (12) dem durch Sehnen angenäherten Verlauf der von außen angelegten Ellipse (18) folgt.

3. Niet nach Anspruch 1 oder 2, **dadurch gekennzeichnet, dass** der Nietkopf (14) als sehr flacher Zylinder ausgebildet ist.

4. Niet nach Anspruch 1, 2 oder 3, **dadurch gekennzeichnet, dass** die Höhe des Nietschaftes (12) der halben Länge der großen Achse (A) der Ellipse (18) entspricht.

5. Niet nach Anspruch 1, 2 oder 3, **dadurch gekennzeichnet, dass** der Unterschied der Außenradien des Nietschaftes (12) am schaftseitigen und kopfseitigen Ende der halben Länge der kleinen Achse (a) der Ellipse (18) entspricht.

6. Niet nach Ansprüche 1 bis 5, **dadurch gekennzeichnet, dass** die Ausnehmung (16) kopfseitig kegelförmig zuläuft.

7. Niet nach einem der Ansprüche 1 bis 5, **dadurch gekennzeichnet, dass** die Ausnehmung (16) kopfseitig in einem elliptischen Bogen endet.

8. Niet nach einem der Ansprüche 1 bis 7, **dadurch gekennzeichnet, dass** der Übergang von der Außenkontur des Schaftes (12) des Nietes (10) am schaftseitigen Ende des Niets (10) zur Innenkontur, die die Ausnehmung (16) begrenzt, durch einen sehr kleinen Radius (R) außen und einen sehr großen Radius (R 1.5) innen gebildet ist.

9. Niet nach einem der Ansprüche 1 bis 7, **dadurch gekennzeichnet, dass** die Außenkontur des Schaftes (12) des Niets (10) am schaftseitigen Ende des Niets etwa rechtwinklig in eine kreisringförmige Fläche (20) übergeht, und diese in einem großen Radius (R 1.5) in die Innenkontur, die die Ausnehmung (16) begrenzt, übergeht.

10. Niet nach einem der Ansprüche 1 bis 7, **dadurch gekennzeichnet, dass** die Außenkontur des Schaftes (12) des Niets (10) am schaftseitigen Ende des Niets (10) etwa rechtwinklig in eine kreisringförmige Fläche (20) übergeht, und der schaftseitige Teil der Innenkontur, die die Ausnehmung (16) begrenzt, im wesentlichen dem Verlauf einer kleineren Ellipse (22) folgt, die dem Schaft (12) zumindest teilweise einbeschrieben ist, und deren große Achse im wesentlichen parallel zu der Achse des Niets (10) verläuft.

11. Niet nach einem der Ansprüche 1 bis 7, **dadurch gekennzeichnet, dass** die Außenkontur des Schaftes (12) des Niets (10) am schaftseitigen Ende des Niets (10) spitzwinklig in eine Schräge (26) übergeht, die bereits die Innenkontur der Ausnehmung (16) bildet, sodass die Ausnehmung (16) aus einem in Richtung des Nietkopfes (14) zulaufenden Kegelstumpf besteht, der kopfseitig in einen zylindrischen Bereich übergeht.

12. Niet nach einem der Ansprüche 1 bis 7, **dadurch gekennzeichnet, dass** die Außenkontur des Schaftes (12) des Niets (10) am schaftseitigen Ende des Niets mit einem kleinen Radius (R) in die Innenkontur übergeht, die die Ausnehmung (16) begrenzt, und die in ihrem schaftseitigen Teil im wesentlichen dem Verlauf einer kleineren Ellipse (22) folgt, die dem Schaft (12) zumindest teilweise einbeschrieben ist, und deren große Achse im wesentlichen parallel zu der Achse des Niets (10) verläuft.

13. Niet nach einem der Ansprüche 1 bis 12, **dadurch gekennzeichnet, dass** er aus Stahl, Edelstahl, Aluminium oder Titan hergestellt ist.

## Claims

1. Self-piercing rotationally symmetric rivet (10) having a rivet head (14) and a rivet shank (12) with a central recess (16) which is closed by the rivet head (14), **characterized in that** the rivet shank (12) is having an exterior contour which in general is following the course of an ellipse lined up against to the rivet shank from the outside thereof, the major axis (A) thereof in general extending parallel to the axis of the rivet (10).

2. Rivet according to claim 1, **characterized in that** the exterior contour of the rivet shank (12) is following the course approached by the chords of the ellipse (18) lined up from the exterior.

3. Rivet according to claim 1 or 2, **characterized in that** the rivet head (14) is designed as a very flat cylinder.

4. Rivet according to claims 1, 2 or 3, **characterized in that** the height of the rivet shank (12) is corresponding to the half of the length of the major axis (A) of the ellipse (18).

5. Rivet according to claims 1, 2 or 3, **characterized in that** the difference between the exterior radii of the rivet shank (12) at the end on the side of the shank and of the head is corresponding to the halves of the length of the minor axis (a) of the ellipse (18).

6. Rivet according to claims 1 to 5, **characterized in that** on the head side the recess (16) is extending in the shape of a cone.

7. Rivet according to any of the claims 1 to 5, **characterized in that** the recess (16) on the side of the head is ending in an elliptical curve.

8. Rivet according to any of the claims 1 to 7, **characterized in that** the transition from the outer contour of the shank (12) of the rivet (10) at the end on the side of the shank of the rivet (10) to the inner contour, which is limiting the recess (16), is formed by a very small radius (R) on the outside in a very large radius (R 1.5) on the inside.

9. Rivet according to any of the claims 1 to 7, **characterized in that** the outer contour of the shank (12) of the rivet (10) is about in an right angle merging into an annular phase (20) on the end of the rivet at the side of the shank and said surface (20) is merging in a large radius (R 1.5) into the inner contour which is limiting the recess (16).

10. Rivet according to any of the claims 1 to 7, **characterized in that** the outer contour of the shaft (12) of the rivet (10) and the end of the rivet (10) on the side of the shaft is merging in about an right angle into an annular phase (20) and that the part of the inner contour on the side of the shaft, which is limiting the recess, basically is following the course of a smaller ellipse (22) which at least partly is included in the shank (12) with the major axis thereof basically extending parallel to the axis of the rivet (10).

11. Rivet according to any of the claims 1 to 7, **characterized in that** the outer contour of the shank (12) of the rivet (10) at the end of the rivet (10) on the side of the shank is merging in an acute angle into a bevel (26) which already is forming the inner contour of the recess (16) such that the recess (16) is consisting of a truncated cone tapering in the direction of the rivet head (14) which on the side of the head is merging into a cylindrical section.

12. Rivet according to any of the claims 1 to 7, **characterized in that** the outer contour of the shank (12) of the rivet (10) on the end on the side of the shank of the rivet is merging with a small radius (R) into the inner contour which is limiting the recess (16) and which in its part on the side of the shank in general is following the course of a smaller ellipse (22) which at least partly is included in the shank (12) with the major axis thereof basically extending parallel to the axis of the rivet (10).

13. Rivet according to any of the claims 1 to 12, **characterized in that** the rivet is manufactured from steel, stainless steel, aluminum or titan.

## Revendications

1. Rivet symétrique en rotation et auto-perforant (10) comportant une tête de rivet (14) et une tige de rivet (12) pourvue d'un évidement centré (16) qui est fermé par la tête de rivet (14), **caractérisé en ce que** la tige de rivet (12) présente un contour extérieur qui suit sensiblement l'extension d'une ellipse (18) en contact depuis l'extérieur sur la tige de rivet et dont le grand axe (A) s'étend sensiblement en parallèle à l'axe du rivet(10).

2. Rivet selon la revendication 1, **caractérisé en ce que** le contour extérieur de la tige de rivet (12) suit l'extension approchée à la corde de l'ellipse en contact depuis l'extérieur (18).

3. Rivet selon la revendication 1 ou 2, **caractérisé en ce que** la tête de rivet (14) est réalisée sous forme d'un cylindre très plat.

4. Rivet selon la revendication 1, 2 ou 3, **caractérisé en ce que** la hauteur de la tige de rivet (12) équivaut à la moitié de la longueur du grand axe (A) de l'ellipse (18).

5. Rivet selon la revendication 1, 2 ou 3, **caractérisé en ce que** la différence entre les rayons extérieurs de la tige de rivet (12) à l'extrémité située côté arbre et côté tête équivaut à la moitié de la longueur du petit axe (a) de l'ellipse (18).

6. Rivet selon les revendications 1 à 5, **caractérisé en ce que** l'évidement (16) converge en une forme conique du côté tête.

7. Rivet selon une des revendications 1 à 5, **caractérisé en ce que** l'évidement (16) se termine en un arc elliptique du côté tête.

8. Rivet selon une des revendications 1 à 7, **caractérisé en ce que** la transition entre le contour extérieur de la tige (12) du rivet (10) à l'extrémité située côté tige du rivet (10) et le contour extérieur limitant l'évidement (16) est constituée par un rayon très petit (R) à l'extérieur et un rayon très grand (R 1.5) à l'intérieur.

9. Rivet selon une des revendications 1 à 7, **caractérisé en ce que** le contour extérieur de la tige (12) du rivet (10), à l'extrémité située côté tige du rivet (10), transite à peu près orthogonalement dans une surface de forme circulaire (20) et que celle-ci transite dans un grand rayon (R 1.5) dans le contour intérieur limitant l'évidement (16).

10. Rivet selon une des revendications 1 à 7, **caractérisé en ce que** le contour extérieur de la tige (12) du rivet (10), à l'extrémité située côté tige du rivet (10), transite à peu près orthogonalement dans une surface de forme circulaire (20) et que la partie située côté tige du contour intérieur limitant l'évidement (16) suit sensiblement l'extension d'une ellipse plus petite (22) qui est circonscrite du moins partiellement dans la tige (12) et dont le grand axe s'étend sensiblement en parallèle à l'axe du rivet (10).

11. Rivet selon une des revendications 1 à 7, **caractérisé en ce que** le contour extérieur de la tige (12) du rivet (10), à l'extrémité située côté tige du rivet (10), transite en angle aigu dans une oblique (26) qui constitue déjà le contour intérieur de l'évidement (16), de sorte que l'évidement (16) est composé d'un tronc conique convergeant en direction de la tête de rivet (14) et transitant du côté tête dans une zone cylindrique.

12. Rivet selon une des revendications 1 à 7, **caractérisé en ce que** le contour extérieur de la tige (12) du rivet (10), à l'extrémité située côté tige du rivet (10), transite avec un petit rayon (R) dans le contour intérieur limitant l'évidement (16) et suit sensiblement dans sa partie située côté tige l'extension d'une plus petite ellipse (22) qui est circonscrite du moins partiellement dans la tige (12) et dont le grand axe s'étend sensiblement en parallèle à l'axe du rivet (10).

13. Rivet selon une des revendications 1 à 12, **caractérisé en ce qu'**il est fabriqué en acier, inox, aluminium ou titane.
